# EUROPEAN PATENT APPLICATION

(11) **EP 3 952 015 A1**
(43) Date of publication of application: **09.02.2022**
(21) Application number: 20902921.4
(22) Date of filing: 08.12.2020
(51) Int. Cl.: H01M 50/20, B23K 26/00, B23K 26/21, B23K 101/36

(54) **BATTERY MODULE AND METHOD OF MANUFACTURING SAME**

(30) Priority: 19.12.2019 KR 20190170941; 07.12.2020 KR 20200169335
(71) Applicant: LG ENERGY SOLUTION, LTD., Seoul 07335 (KR)
(72) Inventor: LEE, Changje, Daejeon 34122 (KR); YOON, Hanjong, Daejeon 34122 (KR); BAE, Jaehyun, Daejeon 34122 (KR)
(74) Representative: Plasseraud IP
(86) International application number: PCT/KR2020/017827
(87) International publication number: WO 2021/125659

(57) **Abstract**

A coupling structure according to an embodiment of the present disclosure includes a first member and a second member which are adjacent to each other, the first member and second member are weld-coupled to each other, a welding part of the first member and the second member includes a first welding part formed in the first member and a second welding part formed in the second member with respect to a coupling surface of the first member and the second member, and the first welding part and the second welding part have a mutually asymmetrical shape.

## Description

### [TECHNICAL FIELD]

### Cross Citation with Related Applications)

This application claims the benefit of Korean Patent Application No. 10-2019-0170941 filed on December 19, 2019 and Korean Patent Application No. 10-2020-0169335 filed on December 7, 2020 in the Korean Intellectual Property Office, the disclosures of which are incorporated herein by reference in their entirety.

The present disclosure relates to a battery module and a method for manufacturing the same, and more particularly to a battery module that improves coupling strength through welding, and a method for manufacturing the same.

### [BACKGROUND ART]

Secondary batteries, which are easily applicable to various product groups and has electrical characteristics such as high energy density, are universally applied not only for a portable device but also for an electric vehicle or a hybrid electric vehicle, an energy storage system or the like, which is driven by an electric driving source. Such secondary battery is attracting attention as a new environment-friendly energy source for improving energy efficiency since it gives a primary advantage of remarkably reducing the use of fossil fuels and also does not generate byproducts from the use of energy at all.

Small-sized mobile devices use one or several battery cells for each device, whereas middle or large-sized devices such as vehicles require high power and large capacity. Therefore, a middle or large-sized battery module having a plurality of battery cells electrically connected to one another is used.

The middle or large-sized battery module is preferably manufactured so as to have as small a size and weight as possible. Consequently, a prismatic battery, a pouch-shaped battery or the like, which can be stacked with high integration and has a small weight relative to capacity, is usually used as a battery cell of the middle or large-sized battery module. Meanwhile, in order to protect the battery cell stack from external impact, heat or vibration, the battery module may include a module frame of which a front surface and a rear surface are opened so as to house the battery cell stack in an internal space, and an end plate that covers the front surface and the rear surface of the module frame.

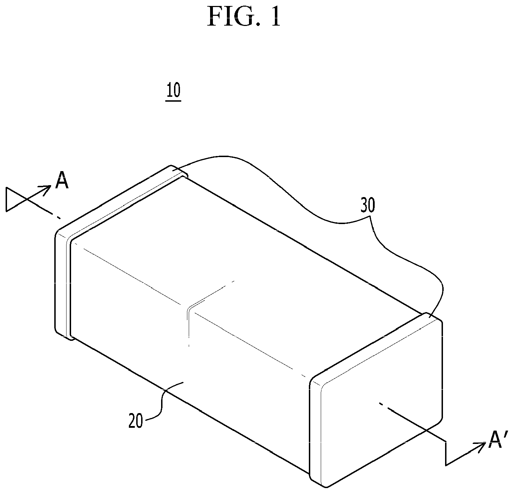

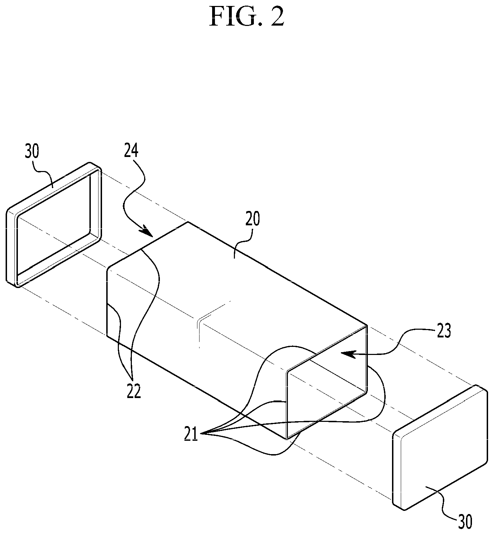

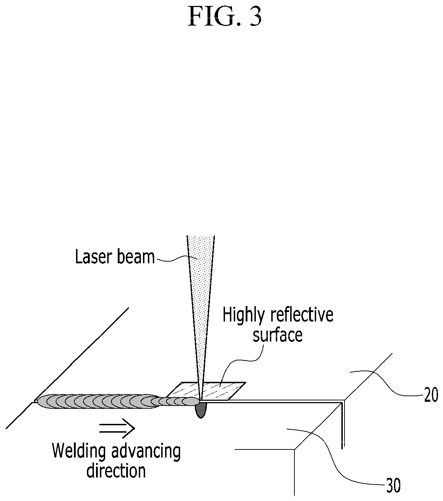

A welding process may be performed for the coupling between the module frame and an end plate, which are formed of metals. FIG. 1 is a perspective view illustrating a battery module according to the related art. FIG. 2 is an exploded perspective view of the battery module of FIG. 1. FIG. 3 is a schematic view illustrating the coupling between a module frame and an end plate through welding in the battery module of FIG. 1.

Referring to FIGS. 1 and 2, the battery module 10 includes a cell stack (not illustrated) including one or more battery cells, a module frame 20 for housing the cell stack, of which a front surface 23 and a rear surface 24 facing each other are opened, and an end plate 30 that covers the front surface 23 and the rear surface 24 of the module frame 20, respectively.

In more detail, the module frame 20 may have a rectangular metal plate shape, of which the front surface 23 and the rear surface 24 are opened, and includes four edges 21 constituting the front surface 23 and four edges 22 constituting the rear surface 24.

However, referring to an area indicated in FIG. 3, a blow hole phenomenon in which compressed air left inside the metal of the module frame 20 or the end plate 30 explode toward outside during welding may occur, which causes a reduction of welding reliability. In addition, the surface reflectance of the materials constituting the module frame 20 and the end plate 30 are high, and thus coupling strength decreases.

### [DETAILED DESCRIPTION OF THE INVENTION]

### [Technical Problem]

It is an object of the present disclosure to provide a battery module that improves coupling strength through welding, and a method for manufacturing the same.

However, the objects of embodiments of the present disclosure are not limited to the aforementioned objects, and can be variously expanded within the scope of the technical idea included in the present disclosure.

### [Technical Solution]

According to one embodiment of the present disclosure, there is provided a coupling structure comprising: a first member and a second member which are adjacent to each other, wherein the first member and second member are weld-coupled to each other, wherein a welding part of the first member and the second member includes a first welding part formed in the first member and a second welding part formed in the second member with respect to a coupling surface of the first member and the second member, and wherein the first welding part and the second welding part have a mutually asymmetrical shape.

A curve of a vertical cross-section of the second welding part may include a point of inflection.

The first member may be an extruded material component or a plate material component, and the second member may be a die-casting component.

The asymmetrical shape of the first welding part and the second welding part may be defined with respect to a surface which is perpendicular to a welding advancing direction.

The first member and the second member may have mutually different properties.

According to another embodiment of the present disclosure, there can be provided a battery module comprising: a cell stack including a plurality of battery cells, a module frame which houses the plurality of battery cell stacks, and of which one side and the other side facing each other are opened; and an end plate coupled to the module frame through welding on one side and the other side of the module frame, wherein a welding part of the module frame and the end plate includes a first welding part formed in the module frame and a second welding part formed in the end plate, with respect to a coupling surface of the module frame and the end plate, and wherein the first welding part and the second welding part have a mutually asymmetrical shape.

A curve of a vertical cross-section of the second welding part may include a point of inflection.

The module frame may be an extruded material component or a plate material component, and the end plate may be a die-casting component.

The asymmetrical shape of the first welding part and the second welding part may be defined with respect to a surface which is perpendicular to a welding advancing direction.

The module frame may include a first joining surface formed in a part coupled to the end plate, the end plate may include a second joining surface corresponding to the first joining surface and formed in a part coupled to the module frame, and a recessed portion may be formed on at least one of the first joining surface and the second joining surface.

The recessed portion may be recessed in a direction that is perpendicular to the first joining surface or the second joining surface.

The recessed portion may be spaced apart from a periphery of the first joining surface or a periphery of the second joining surface.

The end plate may further include a protrusion part located at a more central side of the end plate than the second joining surface and extending toward that the module frame.

According to another embodiment of the present disclosure, there is provided a method for manufacturing a battery module, the method comprising: a step of mounting a battery cell stack including a plurality of battery cells on a module frame, of which one side and the other side facing each other are opened, and a step of coupling an end plate to the module frame on one side and the other side of the module frame, a step of coupling the module frame and the end plate uses a welding method of a Snowman wobble pattern.

The welding method of the Snowman wobble pattern includes double wobble pattern, and a welding energy density that is applied to the module frame may be larger than a welding energy density that is applied to the end plate.

A welding beam of the double wobble pattern that is applied to the module frame may be a circular shape, and a welding beam of the double wobble pattern that is applied to the end plate may be an elliptical shape.

According to yet another embodiment of the present disclosure, there is provided a battery pack comprising the above-mentioned battery module.

### [ADVANTAGEOUS EFFECTS]

According to the embodiments of the present disclosure, when the components coupled through welding are formed of mutually different materials, the coupling strength can be improved by using the welding method having the double wobble pattern.

### [BRIEF DESCRIPTION OF THE DRAWINGS]

FIG. 1 is a perspective view illustrating a battery module according to the related art;
FIG. 2 is an exploded perspective view illustrating the battery module of FIG. 1;
FIG. 3 is a schematic view illustrating the coupling between a module frame and an end plate through welding in the battery module of FIG. 1;
FIG. 4 is a perspective view illustrating a battery module having a module frame according to an embodiment of the present disclosure;
FIG. 5 is a view illustrating a wobble pattern applied to a welding method according to a comparative example;
FIG. 6 is a view illustrating a molten pool behavior when the battery module illustrated in FIG. 3 is manufactured through the welding method having the wobble pattern of FIG. 5;
FIG. 7 is a view illustrating the wobble pattern applied to the welding method according to the embodiment of the present disclosure;
FIG. 8 is a view illustrating a method of manufacturing the battery module illustrated in FIG. 4 using the welding method having the wobble pattern of FIG. 7;
FIG. 9 is a view illustrating a molten pool behavior when the battery module illustrated in FIG. 8 is manufactured using the welding method having the wobble pattern of FIG. 8;
FIG. 10 is a partial perspective view illustrating a battery module according to another embodiment of the present disclosure; and
FIG. 11 is a partial perspective view illustrating a battery module according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are shown to be exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the specification, when a portion is referred to as "including" a certain component, it means that it can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

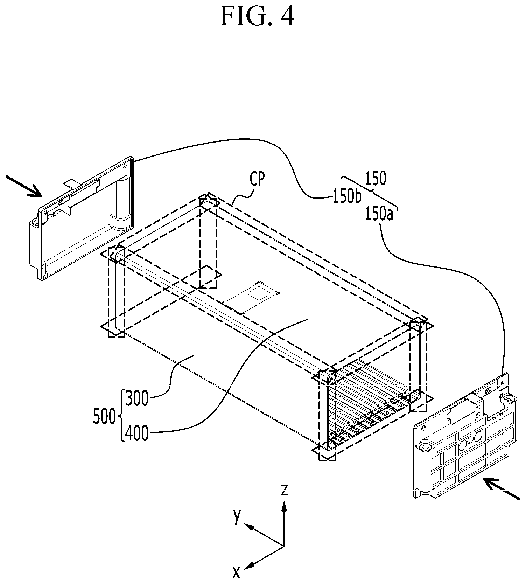

FIG. 4 is a perspective view illustrating a battery module having a module frame according to an embodiment of the present disclosure.

Referring to FIG. 4, a battery module according to the present embodiment includes a module frame 500, of which one side and the other side facing each other in one direction are opened, and an end plate 150 coupled to the module frame 500 on one side and the other side of the module frame 500. The module frame 500, except for both sides opened in the Y-axis direction, covers a battery cell stack formed by stacking a plurality of battery cells.

The module frame 500 according to the present embodiment may include a U-shaped frame 300 and an upper plate 400 that cover an opened upper part of the U-shaped frame 300. The end plate 150 may include a front surface plate 150a that covers one side of the module frame 500 and a rear surface plate 150b that covers the other side of the module frame 500.

In order to form the battery module, after the module frame 500 and the end plate 150 are aligned in a state in which the battery cell stack is mounted in the interior of the module frame 500, the front surface plate 150a and the rear surface plate 150b may be weld-coupled to each other at an edge portion that defines the opened one side and the other side of the module frame 500. As illustrated in FIG. 4, coupling parts (CP) by welding may be formed of 10 parts in total. According to the present embodiment, among the coupling parts (CP), the coupling part (CP), in which the module frame 500 and the end plate 150, which have mutually different properties, are welded, may be formed by using a Snowman wobble pattern welding method. Here, the physical properties may collectively refer to the electrical, magnetic, optical, mechanical, or thermal properties of a substance. For example, having mutually different physical properties may mean a case having differences in surface reflectance.

Hereinafter, the Snowman wobble pattern welding method explained in the present disclosure will be described in detail by comparing a comparative example and the embodiment.

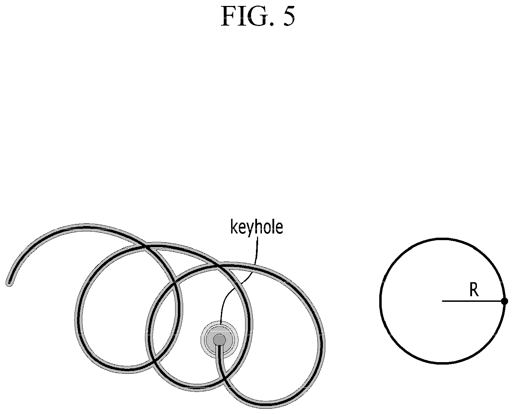

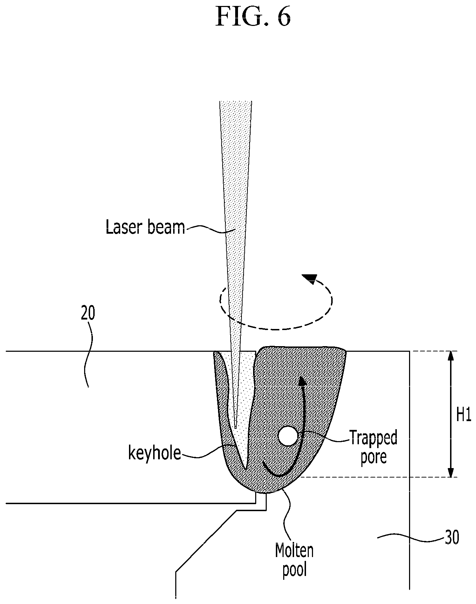

FIG. 5 is a view illustrating a wobble pattern applied to a welding method according to a comparative example. FIG. 6 is a view illustrating a molten pool behavior when the battery module illustrated in FIG. 3 is manufactured through the welding method having the wobble pattern of FIG. 5.

Referring to FIGS. 5 and 6, a laser wobble pattern according to the comparative example has a pattern that repeats simply one circular shape. A wobble parameter of a circular shape pattern may be adjusted by a radius value R, and the circular shape pattern may be formed about one axis along a welding advancing direction. A molten pool according to the comparative example may have a substantially symmetrical cross-sectional structure. When a material having a highly reflective surface as in FIG. 3 is welded by the welding method having the laser wobble pattern according to the comparative example, welding may not be properly performed or a level of coupling caused by welding may decrease. Referring to FIGS. 3 and 6, the module frame 20 according to the comparative example may be formed of a highly reflective material such as an aluminum plate material or an extruded material. Further, the end plate 30 coupled to the module frame 20 through welding may be die-cast product, and a large amount of blow holes or burn through and spatters may be caused in welding beads by hydrogen and the like that are left in the die-cast product at the time of welding the die-cast product. Because a penetration depth H1 of the end plate 30, to which the welding method according to the comparative example is applied, is large, compression pores or blow holes left inside the metal of the module frame 20 or the end plate 30 may be easily caused.

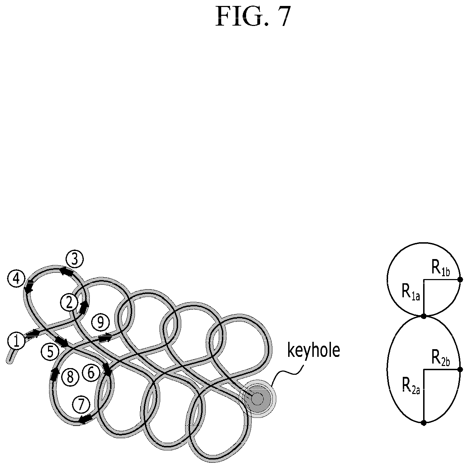

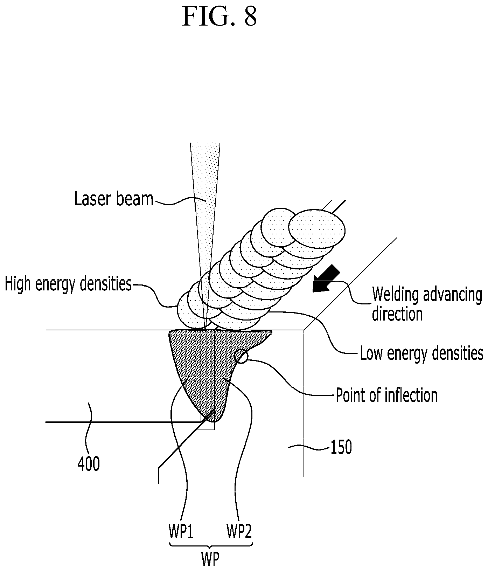

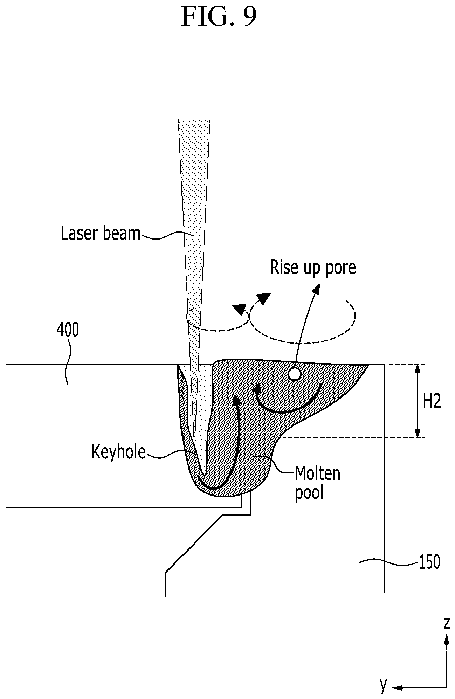

FIG. 7 is a view illustrating the wobble pattern applied to the welding method according to the embodiment of the present disclosure. FIG. 8 is a view illustrating a method of manufacturing the battery module illustrated in FIG. 4 using the welding method having the wobble pattern of FIG. 7. FIG. 9 is a view illustrating a molten pool behavior when the battery module illustrated in FIG. 8 is manufactured using the welding method having the wobble pattern of FIG. 8.

Referring to FIG. 7, the wobble pattern applied to the welding method according to the present embodiment includes a Snowman wobble pattern. A key hole is formed by repeating a Snowman wobble pattern while drawing a Snowman pattern in the sequence of No. 1 to No. 9 illustrated in FIG. 7. In the Snowman pattern, the two circular shapes have wobble parameters R₁ and R2, respectively, and the wobble parameters can be adjusted, so that energy densities of components having mutually different physical properties can be applied differently. In more detail, as the wobble parameter R₁ has R₁ₐ and R_{1b}, the Snowman wobble pattern may have an ellipse shape as well as a circular shape, and also as the wobble parameter R2 has R2a and R2b, the Snowman wobble pattern may be an ellipse shape as well as a circular shape.

Hereinafter, the method for manufacturing the battery module by applying the welding method according to the present embodiment will be described.

Referring to FIGS. 4, 7, and 8, the method for manufacturing a battery module according to the present embodiment includes a step of mounting a battery cell stack including a plurality of battery cells on the module frame 500, of which one side and the other side facing each other are opened, and a step of coupling the end plate 150 to the module frame 500 on one side and the other side of the module frame 500. Here, the step of coupling the module frame 500 and the end plate 150 uses the Snowman wobble pattern welding method. The Snowman wobble pattern may include a double wobble pattern designed such that the welding energy density applied to the upper plate 400 included in the module frame 500 is larger than the welding energy density applied to the end plate 150.

According to the present embodiment, a welding beam of the double wobble pattern, which is applied to the module frame 500 may be a circular shape, and a welding beam of the double wobble pattern, which is applied to the end plate 150, may be an elliptical shape. In detail, wobble parameters R₁ₐ and R_{1b} are identical to each other in the welding beam of the double wobble pattern, which is applied to the module frame 500, and wobble parameters R2a and R2b are different from each other in the welding beam of the double wobble pattern, which is applied to the end plate 150, and at least one of R2a and R2b may have a value that is larger than R₁ₐ or R_{1b}. In this way, the double wobble pattern is formed in which the energy densities applied to two components having mutually different physical properties weld-coupled to each other is made different by adjusting the shapes of the welding beams to be different from each other. In particular, the wobble parameter of the welding beam applied to the surface of the upper plate 400 included in the highly reflective module frame 500 can be made small to increase energy density, thereby preventing weak welding due to suppression of laser beam reflection.

In contrast, as illustrated in FIG. 9, the wobble parameter of the welding beam applied to the surface of the end plate 150 that is a die-cast product can be made larger to decrease energy density, thereby forming the molten pool having a small penetration depth H2 and a larger area. Accordingly, because air is easily escaped and hydrogen is prevented from flowing out in the deep part of the molten pool, the blow hole can be restrained. Further, because the double wobble pattern according to the present embodiment has a form to which weaving is added, the ability to respond to a gap or a mis-alignment between the components coupled through welding is also superior to that of the comparative example.

Until now, although it has been described that the energy density is adjusted with the shape and the area of the wobble pattern by adjusting the wobble parameter, but in addition to the above, the energy density can be adjusted by adjusting the moving speed of the welding beam. In addition, the shape and the area of the wobble pattern and the moving speed of the welding beam can be adjusted at the same time, thereby adjusting the energy density.

Hereinafter, the battery module formed by applying the Snowman wobble pattern welding method according to the above-mentioned embodiment will be additionally described.

Referring to FIGS. 4, 8, and 9, a welding part WP of the module frame 500 and the end plate 150 includes a first welding part WP1 formed in the module frame 500 and a second welding part WP2 formed in the end plate 150, with respect to the coupling surface of the module frame 500 and the end plate 150. Here, the first welding part WP1 and the second welding part WP2 have mutually asymmetrical shapes. The asymmetrical shapes of the first welding part WP1 and the second welding part WP2 may be defined with respect to a surface which is perpendicular to the X-axis direction in which the welding advances. According to the present embodiment, a curve of a vertical cross-section of the second welding part WP2 may include a point of inflection. As illustrated in FIG. 9, the vertical cross-section of the second welding part WP2 is the vertical cross-section that is parallel to a plane YZ of the molten pool.

Although it has been described above with reference to the U-shaped module frame, the same problem may occur in the case of a mono frame of a shape, of which one side and the other side in the Y-axis direction of FIG. 4 are opened, and in which four surfaces thereof are integrally connected to each other. Here, in the mono frame, a total of eight welding coupling parts, except for two coupling parts of the U-shaped frame and the upper plate in the U-shaped module frame, may be formed.

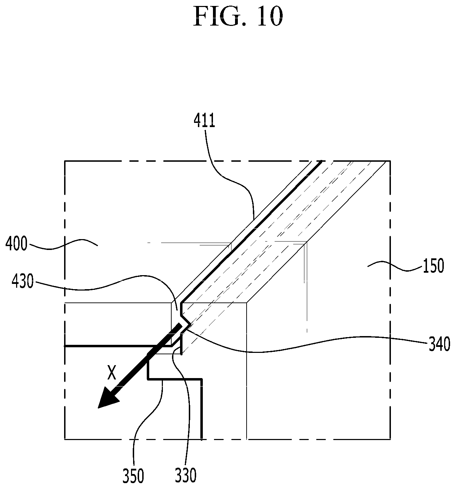

FIG. 10 is a partial perspective view illustrating a battery module according to another embodiment of the present disclosure.

Referring to FIG. 10, an upper plate 400 included in a module frame includes a first joining surface 430 formed at an edge portion 411 that defines one side and the other side that are opened, respectively, and an end plate 150 includes a second joining surface 330 that is joined to the first joining surface 430.

The module frame 500 and the end plate 150 may include metals having mutually different physical properties, and the first joining surface 430 and the second joining surface 330 may be weld-coupled to each other in order to join the module frame 500 and the end plate 150, which are formed of metals. According to the present embodiment, a recessed portion 340 may be formed in the second joining surface 330. In detail, the recessed portion 340 may be recessed in a direction that is perpendicular to the second joining surface 330, and may be formed in a structure extending along the X-axis direction of FIG. 4. That is, the recessed portion 340 may provide a passage through which gas moves between the first joining surface 430 and the second joining surface 330.

In order to manufacture the end plate 150, die-casting process may be used, and compression pores may be formed in the interior of the end plate 150 during the process. Here, a blow hole phenomenon in which compression pores explode toward the outside direction of the battery module during welding may occur to reduce welding reliability when the recessed portion 340 is not formed. However, according to the present embodiment, because the recessed portion 340 has a structure extending along the X-axis direction, the compression pores of the interior of the metal may be guided so as to move along the X-axis direction. Accordingly, as a result, the blow hole phenomenon in which the compression pores explode toward the outside of a coupling surface of the first joining surface 430 and the second joining surface 330 can be prevented to thereby improve the welding joining force between the module frame 500 and the end plate 150.

It is preferable that the recessed portion 340 is spaced apart from peripheral edges of the second joining surface 330. Among them, it is preferable that the recessed portion 340 is spaced apart from an edge located in the upper part of edges of the second joining surface 330, that is, an edge exposed to the outside of the battery module. Otherwise, because the recessed portion 340 is adjacent to the outside of the battery module, the gas moving in the space inside the recessed portion 340 may not be prevented from exploding outside.

As illustrated in FIG. 10, the end plate 150 according to the present embodiment may further include a protrusion part 350 protruding toward the module frame 500. The protrusion part 350 may be a shape extending along a direction parallel to the edges of the end plate 150. That is, it may be a shape which the protrusion part 350 is connected along the area in which the welding coupling of the first joining surface 430 and the second joining surface 330 are made.

When the module frame 500 is coupled to the end plate 150, the protrusion part 350 is inserted into an opened front surface of the module frame 500, so that the module frame 500 and the end plate 150 may be coupled to each other without any misalignment. Further, because the welding advances in a state in which the first joining surface 430 and the second joining surface 330 make contact with each other without any misalignment due to the protrusion part 350, the welding may be more easily performed. Additionally, a distortion in the weld area due to the generated heat may be prevented, and even if a slight distortion occurs, a distortion or a protrusion part in the weld area may be prevented from affecting the battery cells or the devices of the interior of the module frame 500.

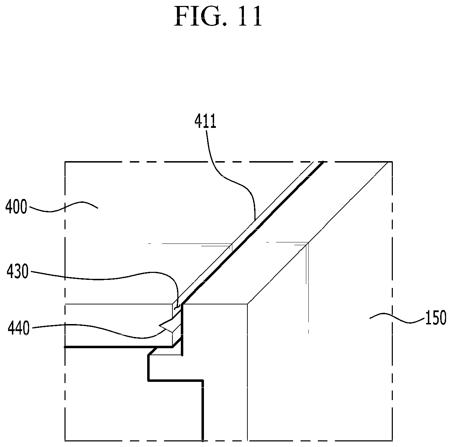

FIG. 11 is a partial perspective view illustrating a battery module according to another embodiment of the present disclosure. The contents of the embodiments illustrated in FIG. 11 are mostly the same as those of the embodiments described in FIG. 10, but only different parts will be described in the following.

Referring to FIG. 11, unlike the embodiment of FIG. 10, the recessed portion 440 may be formed in the first joining surface 430. The recessed portion 440 may be recessed in a direction that is perpendicular to the first joining surface 430, and may be formed in a structure extending along the X-axis direction of FIG. 4. The recessed portion 440 of the present embodiment may also provide a passage through which gas moves between the first joining surface 430 and the second joining surface 330.

All the contents described with reference to FIG. 10, is applicable to the present embodiment, except for the above-described differences.

The Snowman wobble pattern welding method is applied to coupling of the module frame and the end plate, but the present disclosure is not limited thereto and it may be applied to welding coupling of components having mutually different physical properties. For example, in a coupling structure including a first member and a second member, which have mutually different physical properties, the above-mentioned Snowman wobble pattern welding method may be applied to coupling of the first member and the second member through welding. The welding part of the first member and the second member includes a first welding part formed in the first member and a second welding part formed in the second member with respect to a coupling surface of the first member and the second member. Here, the first welding part and the second welding part have mutually asymmetrical shapes, and the asymmetrical shapes of the first welding part and the second welding part may be defined with respect to a surface which is perpendicular to the direction in which the welding progresses. A curve of a vertical cross-section of the second welding part may include a point of inflection.

The coupling structure according to another embodiment of the present disclosure may include the first member and the second member having the same physical properties, and the above-mentioned the Snowman wobble pattern welding method may be applied to coupling of the first member and the second member through welding. Here, thicknesses of the first member and the second member may be different. In the way, when the thicknesses of the first member and the second member are different, they may be weld-coupled to each other by controlling the penetration depth and the bead width according to the thickness.

On the other hand, one or more of the battery modules according to the embodiment of the present disclosure can be packaged in a pack case to form a battery pack.

The above-mentioned battery module and a battery pack may be applied to various devices. These devices may be applied to vehicles such as an electric bicycle, an electric vehicle, a hybrid vehicle, but the present disclosure is not limited thereto but can be applied to transportation means such as an electric bicycle, an electric vehicle, a hybrid vehicle, but the present disclosure is not limited thereto and can be applied to various devices that can use the cylindrical battery and the battery pack including the same, which also belongs to the scope of the present disclosure.

Although the preferred embodiments of the present disclosure have been described in detail above, the scope of the present disclosure is not limited thereto, and various modifications and improvements of those skilled in the art using the basic concepts of the present disclosure defined in the following claims also belong to the scope of rights.

### [Description of Reference Numerals]

- 150:: end plate
- 300:: U-shaped frame
- 340:: recessed portion
- 400:: upper plate
- 500:: module frame
- WP:: welding part

## Claims

1. A coupling structure comprising:
a first member and a second member which are adjacent to each other,
wherein the first member and second member are weld-coupled to each other,
wherein a welding part of the first member and the second member comprises a first welding part formed in the first member and a second welding part formed in the second member with respect to a coupling surface of the first member and the second member, and
wherein the first welding part and the second welding part have a mutually asymmetrical shape.

2. The coupling structure of claim 1,
wherein a curve of a vertical cross-section of the second welding part comprises a point of inflection.

3. The coupling structure of claim 2,
wherein the first member is an extruded material component or a plate material component, and the second member is a die-casting component.

4. The coupling structure of claim 2,
wherein the asymmetrical shape of the first welding part and the second welding part is defined with respect to a surface which is perpendicular to a welding advancing direction.

5. The coupling structure of claim 1,
wherein the first member and the second member have mutually different properties.

6. A battery module comprising:
a cell stack comprising a plurality of battery cells;
a module frame which houses the plurality of battery cell stacks, and of which one side and the other side facing each other are opened; and
an end plate coupled to the module frame through welding on one side and the other side of the module frame,
wherein a welding part of the module frame and the end plate comprises a first welding part formed in the module frame and a second welding part formed in the end plate, with respect to a coupling surface of the module frame and the end plate, and
wherein the first welding part and the second welding part have a mutually asymmetrical shape.

7. The battery module of claim 6,
wherein a curve of a vertical cross-section of the second welding part comprises a point of inflection.

8. The battery module of claim 7,
wherein the module frame is an extruded material component or a plate material component, and the end plate is a die-casting component.

9. The battery module of claim 7,
wherein the asymmetrical shape of the first welding part and the second welding part is defined with respect to a surface which is perpendicular to a welding advancing direction.

10. The battery module of claim 6,
wherein the module frame comprises a first joining surface formed in a part coupled to the end plate,
the end plate comprises a second joining surface corresponding to the first joining surface and formed in a part coupled to the module frame, and
a recessed portion is formed on at least one of the first joining surface and the second joining surface.

11. The battery module of claim 10,
wherein the recessed portion is recessed in a direction that is perpendicular to the first joining surface or the second joining surface.

12. The battery module of claim 11, wherein the recessed portion is spaced apart from a periphery of the first joining surface or a periphery of the second joining surface.

13. The battery module of claim 10,
wherein the end plate further comprises a protrusion part that is located at a more central side of the end plate than the second joining surface and is extended toward that the module frame.

14. A method for manufacturing a battery module, the method comprising the steps of:
mounting a battery cell stack comprising a plurality of battery cells on a module frame, of which one side and the other side facing each other are opened; and
coupling an end plate to the module frame on one side and the other side of the module frame,
wherein the step of coupling the module frame and the end plate uses a welding method of a Snowman wobble pattern.

15. The method of claim 14,
wherein the welding method of the Snowman wobble pattern comprises double wobble pattern, and a welding energy density that is applied to the module frame is larger than a welding energy density that is applied to the end plate.

16. The method of claim 15,
wherein a welding beam of the double wobble pattern that is applied to the module frame is a circular shape, and a welding beam of the double wobble pattern that is applied to the end plate is an elliptical shape.

17. A battery pack comprising the battery module of claim 6.
